(19) **Europäisches Patentamt / European Patent Office / Office européen des brevets**

(11) **EP 4 575 900 A1**

(12) **DEMANDE DE BREVET EUROPEEN**

(43) Date de publication:
**25.06.2025 Bulletin 2025/26**

(21) Numéro de dépôt: **24219161.7**

(22) Date de dépôt: **11.12.2024**

(51) Classification Internationale des Brevets (IPC):
**G06N 3/0464** (2023.01)   **G06N 3/084** (2023.01)
**G06N 3/0895** (2023.01)   **G06N 3/09** (2023.01)
**G06T 7/00** (2017.01)   **G06V 10/70** (2022.01)

(52) Classification Coopérative des Brevets (CPC):
**G06N 3/084; G06N 3/0464; G06N 3/0895;
G06N 3/09; G06T 7/70; G06V 10/774;
G06V 10/778; G06V 10/82;** G06T 2207/20081;
G06V 40/103

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **21.12.2023 FR 2314819**

(71) Demandeur: **Commissariat à l'Energie Atomique
et aux Energies
Alternatives
75015 Paris (FR)**

(72) Inventeurs:
• **TAMAAZOUSTI, Mohamed
91191 GIF-SUR-YVETTE CEDEX (FR)**
• **JOLY, Pierre-Julien
91191 GIF-SUR-YVETTE CEDEX (FR)**
• **CHAOUAI, Zakariya
91191 GIF-SUR-YVETTE CEDEX (FR)**

(74) Mandataire: **Atout PI Laplace
Immeuble Up On
25 Boulevard Romain Rolland
CS 40072
75685 Paris Cedex 14 (FR)**

(54) **METHODE DE DETERMINATION D'UN INTERVALLE D'INCERTITUDE ASSOCIE A UNE PREDICTION D'UNE TACHE DE REGRESSION**

(57)   Méthode d'entrainement d'un modèle de prédiction automatique d'une grandeur physique, comprenant les étapes de :

Recevoir (1001) un modèle initial de prédiction automatique de ladite grandeur, le modèle étant pré-entrainé sur un premier ensemble de données d'entrainement,

Générer (1002) un deuxième ensemble de données d'entrainement en dupliquant chaque donnée du premier ensemble plusieurs fois,

Générer (1003) un troisième ensemble de données d'entrainement en ajoutant à chaque donnée du deuxième ensemble de données d'entrainement une valeur de bruit tirée aléatoirement,

Pour chaque donnée du troisième ensemble de données d'entrainement, exécuter (1004) le modèle initial de prédiction automatique pour déterminer une prédiction principale,

Compléter le modèle initial pour prédire en outre au moins deux valeurs d'incertitude,

Entrainer (1005) le modèle complété à partir du deuxième ensemble de données d'entrainement de manière à ce que chaque valeur d'incertitude prédite soit égale à une valeur de quantité de la distribution des valeurs de prédiction principale fournie par le modèle initial à partir du troisième ensemble de données d'entrainement.

FIG.10

**Description**

L'invention concerne le domaine des méthodes d'apprentissage automatique de tâches de régression ou prédiction, en particulier les méthodes d'intelligence artificielle impliquant des réseaux de neurones artificiels. L'invention concerne en particulier les applications de détection et suivi d'objets dans une séquence d'images qui visent à prédire la position d'un objet d'une classe d'objets donnée (par exemple, un individu, un véhicule) dans une image ou une séquence d'images. L'invention trouve notamment application dans le domaine de la conduite de véhicules autonomes ou dans le domaine des applications médicales impliquant de la détection d'objets dans des images médicales ou encore dans le domaine de la vidéosurveillance ou bien encore pour la détection d'objets en trois dimensions à partir d'images en 3D ou de calculs de pose de caméra en trois dimensions. Les domaines d'applications comprennent également la détection de repères faciaux pour la reconnaissance de visages ou la super-résolution.

De manière générale, l'invention peut s'appliquer pour toute tâche de régression qui couvre l'ensemble des méthodes d'analyses statistiques qui permettent d'approcher une variable à partir d'autres variables qui lui sont corrélées.

L'invention s'applique avantageusement dans le contexte de méthodes d'apprentissage supervisé pour lequel les données d'entrainement sont labellisées. L'invention s'applique par exemple à la prédiction de variables météorologiques telles que la température, l'humidité ou la viscosité de l'air. Elle s'applique également à la prédiction de réserves d'énergie, la prédiction d'un âge biologique à partir de données de santé ou encore à la prédiction d'efforts exercés sur une structure mécanique à partir de données issues de capteurs.

Elle vise plus précisément à déterminer un intervalle d'incertitude associé à une prédiction d'au moins une valeur fournie par un modèle d'intelligence artificielle pré-entrainé sur un jeu de données. Par exemple, les valeurs prédites sont les coordonnées des coins d'une boite englobante associé à un objet détecté dans une image. De manière générale, l'invention peut s'appliquer à toute donnée prédite via une tâche de régression apprise par un modèle d'intelligence artificielle pré-entrainé.

Les modèles d'intelligence artificielle, en particulier les réseaux de neurones artificiels, sont des outils qui permettent notamment de résoudre des tâches de régression pour prédire l'évolution de certaines données. Cependant, les résultats de prédiction fournis peuvent présenter des incertitudes qui ont un impact selon le niveau de fiabilité requis par l'application. Par exemple, dans le cas de la prédiction d'une trajectoire d'un véhicule ou de l'identification de la position d'un obstacle, il peut être nécessaire de connaitre le niveau de précision de la prédiction fournie par le modèle.

Les incertitudes qui impactent les modèles d'apprentissage automatique et en particulier les réseaux de neurones peuvent être de deux types. Les incertitudes aléatoires ou stochastiques, encore appelées incertitudes aléatoriques, sont liées à la variabilité inhérente aux données d'entrainement. Ce type d'incertitude est irréductible quel que soit le modèle d'intelligence artificielle car les conditions d'acquisition des données présentent toujours une variabilité minimale.

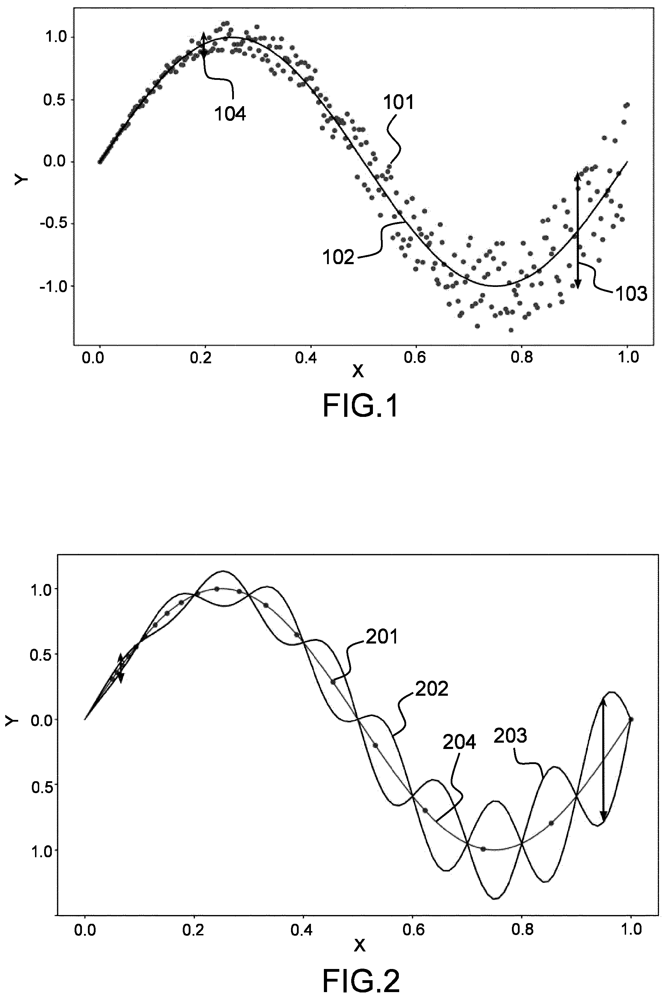

La figure 1 illustre, sur un exemple, ce phénomène. Le diagramme de la figure 1 représente une distribution 101 de données qui sont générées à partir d'un générateur qui suit une distribution théorique 102. Sur la figure 1, on a identifié deux plages d'incertitudes, une plage d'amplitude élevée 103 et une plage d'amplitude plus faible 104. On peut remarquer que l'incertitude entre les données 101 et la courbe théorique 102 est variable selon les valeurs des données.

Les incertitudes épistémiques sont liées aux imprécisions du modèle utilisé. Ces incertitudes peuvent être réduites en augmentant le nombre et la qualité des données d'entrainement et/ou en améliorant l'architecture du modèle mais elles sont d'autant plus présentes que la tâche à résoudre est complexe, peu connue ou que les données sont parcimonieuses.

La figure 2 illustre ce phénomène sur un autre exemple pour lequel les données 201 sont correctement alignées avec la distribution théorique 204 mais cette fois les prédictions 202,203 fournies par un même modèle présentent une variation qui conduit à différents niveaux d'incertitude 205,206.

Quelles que soit les sources des incertitudes (aléatoriques ou épistémiques), elles peuvent affecter la précision des résultats fournis par un modèle d'apprentissage d'une tâche de régression, cette imprécision peut avoir un impact important selon le niveau de précision requis par l'application.

Ces incertitudes sont spécifiques aux données et aux limitations des modèles, il est donc très difficile de pouvoir les corriger.

Cependant, à défaut de pouvoir corriger les problèmes d'incertitude pour améliorer la précision directe de la prédiction fournie, une autre solution consiste à prédire l'amplitude des variations autour de la prédiction de sorte à fournir une fenêtre d'incertitude liée aux perturbations précitées pour accompagner la prédiction.

Le problème général visé par l'invention consiste ainsi à déterminer une fenêtre d'incertitude définie par une valeur minimale et une valeur maximale dans laquelle une prédiction est susceptible de varier en prenant en compte les incertitudes aléatoriques et épistémiques. Par ailleurs, la méthode de calcul d'incertitude doit être applicable à des données de grandes dimensions qui sont exploitées lors de l'entrainement d'un modèle d'apprentissage automatique.

Parmi les solutions connues de l'art antérieur, il existe plusieurs catégories de méthodes permettant d'adresser le problème des incertitudes de prédiction dans les réseaux de neurones artificiels.

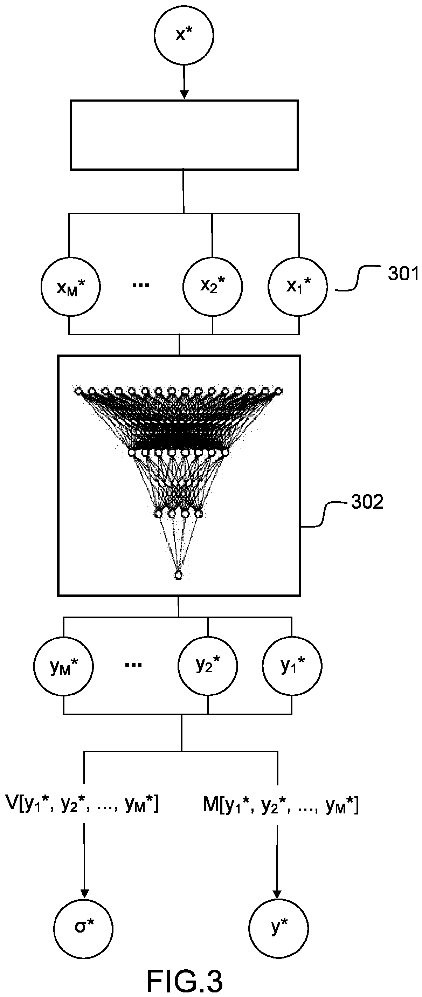

Une première catégorie de méthodes, illustrée à la figure 3, concerne les méthodes dites d'augmentation des données de test x*$_1$, x*$_2$, x*$_M$, qui visent à générer 301 plusieurs ensembles de données à partir d'un premier jeu de données initial x*. Chaque jeu de données est utilisé par un modèle 302 pour générer autant de prédictions y*$_1$, y*$_2$, y*$_M$ à partir desquelles peuvent ensuite être calculées des statistiques, par exemple la moyenne y* et la variance σ*, qui permettent d'en déduire des valeurs d'incertitude. Un exemple d'une telle méthode est donné dans la référence [1]. Ce type de méthode présente l'inconvénient d'une augmentation nécessaire des capacités de stockage de données, en particulier si les données sont de grande dimension, et d'une augmentation du temps d'exécution du modèle.

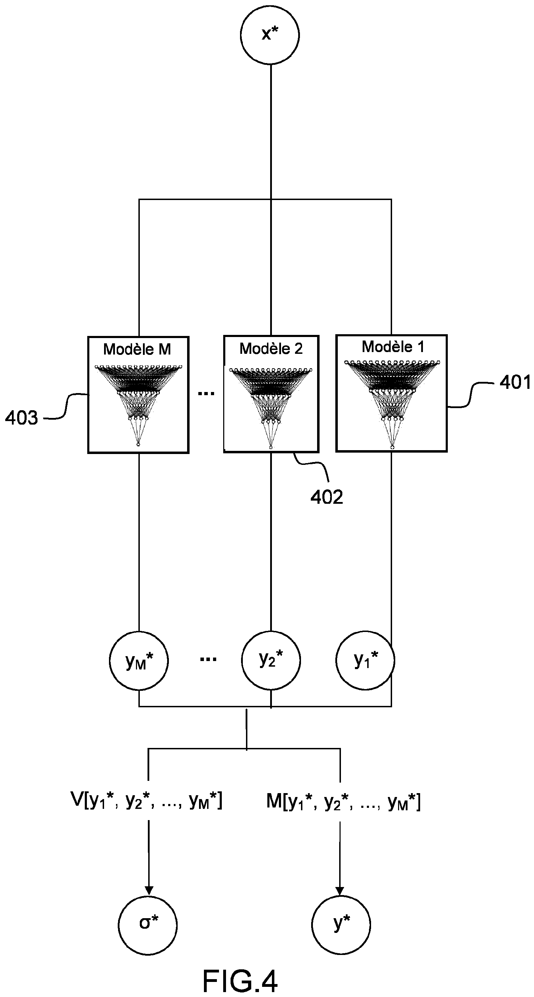

Une deuxième catégorie de méthode concerne les méthodes d'ensemble dont le principe est décrit à la figure 4.

Ce deuxième type de méthode consiste à dupliquer le modèle à entrainer plusieurs fois de sorte à exécuter plusieurs modèles 401, 402, 403 pour les mêmes données d'entrainement x* mais avec différentes initialisations des paramètres. Cette méthode permet ainsi de fournir plusieurs prédictions y*$_1$, y*$_2$, y*$_M$ pour en déduire des informations statistiques associées comme pour les méthodes d'augmentation. Un exemple d'une telle méthode est donné dans la référence [2]. Ce type de méthode présente également l'inconvénient d'une augmentation du temps d'exécution dû à la multiplication des modèles et donc de leurs entrainements.

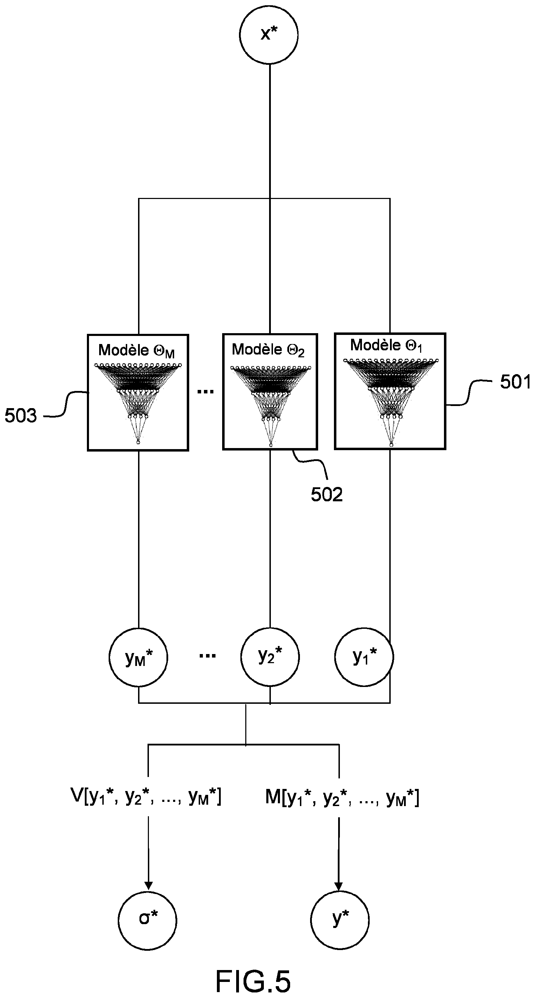

Un troisième type de méthode est décrit à la figure 5 et concerne les méthodes basées sur des réseaux bayésiens telle que décrite dans la référence [3].

Ces méthodes sont basées sur un seul modèle mais qui est instancié plusieurs fois 501, 502, 503 avec différents jeux de paramètres θ$_1$, θ$_M$ qui sont obtenus à partir d'un jeu de paramètre initial qui est modifié par l'ajout de différents bruits générés à partir d'une loi de Bernouilli. Cette méthode présente des inconvénients similaires aux méthodes d'ensemble et en outre présente également des limitations d'utilisation pour les données de grande dimension.

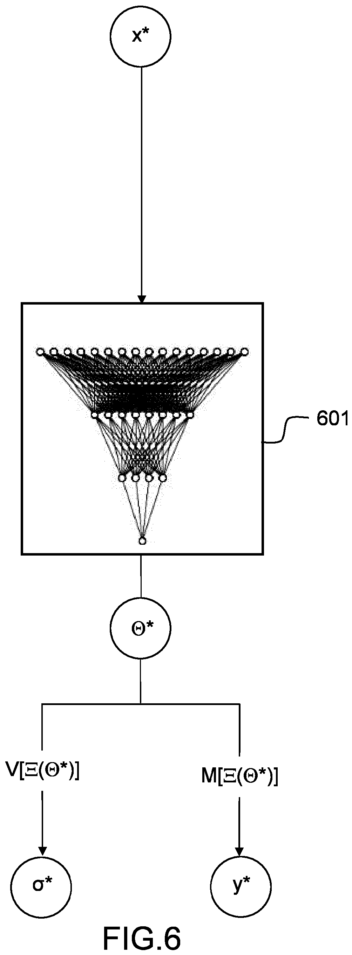

Un quatrième type de méthode est décrit à la figure 6 et concerne les méthodes déterministes. Ces méthodes visent à prédire directement des paramètres statistiques associés à la prédiction visée à partir d'un seul modèle 601 qui assure également la prédiction visée. Un exemple d'une telle méthode est donné dans la référence [4]. Les méthodes déterministes sont efficaces en termes de complexité d'exécution mais peuvent être sensibles aux architectures de réseaux et aux paramètres de l'entrainement du fait qu'elles reposent sur un modèle de prédiction particulier.

L'invention propose une nouvelle méthode de prédiction d'incertitudes déterministe qui présente l'avantage d'être moins calculatoire que les méthodes non déterministes tout en assurant une précision et une pertinence aux informations d'incertitudes estimées par rapport aux méthodes existantes.

L'invention a pour objet une méthode, mise en oeuvre par ordinateur, d'entrainement d'un modèle de prédiction automatique d'une grandeur physique, la méthode comprenant les étapes de :

- Recevoir un modèle initial de prédiction automatique de ladite grandeur, le modèle étant pré-entrainé sur un premier ensemble de données d'entrainement,
- Générer un deuxième ensemble de données d'entrainement à partir du premier ensemble de données d'entrainement en dupliquant chaque donnée du premier ensemble plusieurs fois,
- Générer un troisième ensemble de données d'entrainement en ajoutant à chaque donnée du deuxième ensemble de données d'entrainement une valeur de bruit tirée aléatoirement,
- Pour chaque donnée du troisième ensemble de données d'entrainement, exécuter le modèle initial de prédiction automatique pour déterminer une prédiction principale de la grandeur physique,
- Compléter le modèle initial pour prédire en outre au moins deux valeurs d'incertitude associées à la prédiction principale,
- Entrainer le modèle complété à partir du deuxième ensemble de données d'entrainement de manière à ce que chaque valeur d'incertitude prédite soit égale à une valeur de quantile de la distribution des valeurs de prédiction principale fournie par le modèle initial à partir du troisième ensemble de données d'entrainement.

Selon un aspect particulier de l'invention, le modèle initial comprend une branche de prédiction principale de la grandeur physique et le modèle complété comprend en outre au moins une branche de prédiction supplémentaire entrainée pour prédire les valeurs d'incertitudes.

Selon un aspect particulier de l'invention, le modèle complété est entrainé en minimisant une fonction de perte de quantile fonction de la différence entre une prédiction de la grandeur physique fournie par le modèle initial à partir du troisième ensemble de données d'entrainement et chaque prédiction respective d'une valeur d'incertitude fournie par le modèle complété.

Selon un aspect particulier de l'invention, la fonction de perte de quantile est définie par la relation suivante :

$$\rho\big((y - \hat{y})\big)_\tau = \begin{cases} \tau(y - \hat{y}) \, si \, (y - \hat{y}) \geq 0 \\ (\tau - 1)(y - \hat{y}) \, sinon \end{cases}$$

τ est une valeur de quantile comprise entre 0 et 1, y est une prédiction de la grandeur physique fournie par le modèle initial à partir du troisième ensemble de données d'entrainement, ŷ est une prédiction d'une valeur d'incertitude fournie par le modèle complété.

Selon un aspect particulier de l'invention, la seconde valeur de quantile est égale à un moins la première valeur de quantile.

Selon un aspect particulier de l'invention, le modèle initial comporte une première partie entraînée pour extraire un ensemble de caractéristiques des données d'entrée et une seconde partie comprenant au moins une branche de prédiction.

Selon un aspect particulier de l'invention, la seconde partie du modèle complété comprend une branche de prédiction principale pour prédire une prédiction de ladite grandeur physique et au moins une branche de prédiction supplémentaire des valeurs d'incertitudes de ladite grandeur physique, les paramètres d'entrainement de l'au moins une branche de prédiction de valeurs d'incertitudes étant initialisées aux paramètres d'entrainement de la branche de prédiction principale de la dite grandeur physique.

Selon un aspect particulier de l'invention, les données d'entrainement sont des ensembles d'images et la grandeur physique est une position d'un objet dans une image.

Selon un aspect particulier de l'invention, le modèle initial est entrainé à détecter un objet dans une image et à prédire les coordonnées d'une boite englobant l'objet.

L'invention a aussi pour objet une méthode, mise en oeuvre par ordinateur, de prédiction automatique d'une grandeur physique comprenant l'exécution du modèle de prédiction automatique complété, entrainé au moyen de la méthode d'entrainement selon l'invention de manière à déterminer une prédiction de ladite grandeur physique et deux valeurs d'incertitude de ladite grandeur physique définissant une plage d'incertitude.

Selon un aspect particulier de l'invention, la grandeur physique est une position d'un objet dans une image et les données d'entrainement sont des ensembles d'images.

L'invention a aussi pour objet un dispositif de prédiction automatique d'une grandeur physique comprenant une unité de calcul configurée pour exécuter les étapes de la méthode de prédiction automatique d'une grandeur physique selon l'un des modes de réalisation de l'invention et une interface d'affichage pour afficher les résultats de la méthode.

L'invention a aussi pour objet un programme d'ordinateur comprenant des instructions de code pour la mise en oeuvre de l'une des méthodes selon l'invention, lorsque ledit programme est exécuté sur un ordinateur.

L'invention a aussi pour objet un support d'enregistrement lisible par ordinateur sur lequel est enregistré le programme d'ordinateur selon l'invention.

D'autres caractéristiques et avantages de la présente invention apparaîtront mieux à la lecture de la description qui suit en relation aux dessins annexés suivants.

[Fig. 1] représente un diagramme illustrant le phénomène d'incertitudes stochastiques pour des données d'entrainement d'un modèle d'apprentissage,

[Fig. 2] représente un diagramme illustrant le phénomène d'incertitudes épistémiques pour un modèle d'apprentissage automatique d'une tâche de régression,

[Fig. 3] représente un schéma de principe d'une méthode de détermination d'incertitudes associées à une prédiction à partir d'une augmentation des données de test,

[Fig. 4] représente un schéma de principe d'une méthode de détermination d'incertitudes associées à une prédiction à partir d'un ensemble de plusieurs modèles,

[Fig. 5] représente un schéma de principe d'une méthode de détermination d'incertitudes associées à une prédiction à l'aide d'un réseau bayésien,

[Fig. 6] représente un schéma de principe d'une méthode déterministe de détermination d'incertitudes associées à une prédiction à l'aide d'un modèle unique,

[Fig. 7] représente un schéma d'un exemple d'architecture de modèle d'apprentissage automatique pré-entraîné pour réaliser une tâche de régression,

[Fig. 8] représente un schéma d'un module spécifique à une tâche de régression de l'architecture de la figure 7,

[Fig. 9] représente un schéma du module de la figure 8 complété avec deux branches de prédictions supplémentaires selon un mode de réalisation de l'invention,

[Fig. 10] représente un organigramme détaillant une méthode d'entrainement par réglage fin du modèle complété de la figure 9 selon un mode de réalisation de l'invention,

[Fig. 11] représente un exemple d'application de l'invention à la détection d'objets dans une image,

L'invention consiste, à partir d'un modèle d'intelligence artificielle pré-entraîné pour réaliser une tâche de régression ou prédiction d'une valeur, à compléter ce modèle puis à entrainer le modèle complété pour lui ajouter deux prédictions supplémentaires correspondant aux deux bornes d'un intervalle d'incertitude associé à la prédiction. Le nouvel entrainement est un réglage fin ou « fine tuning » en anglais qui consiste à entrainer un modèle déjà pré-entrainé en lui ajoutant une ou plusieurs branches de prédictions supplémentaires.

Bien que l'invention est décrite par la suite dans le contexte d'un exemple spécifique appliqué à la conduite autonome et qui concerne un modèle pré-entrainé pour réaliser une détection d'objets dans une image avec prédiction des coordonnées d'une boite englobant chaque objet, l'invention n'est pas limitée à cette application ni à cet exemple particulier et peut s'appliquer pour toute tâche de régression visant à prédire l'évolution d'une donnée ou d'une variable, par exemple toute valeur caractéristique d'une position d'un objet dans une image. Les applications possibles ne sont pas limitées à la conduite autonome mais peuvent s'étendre aux domaines de l'imagerie médicale, de la télémédecine ou de la vidéosurveillance pour lesquels un besoin similaire de détection et localisation d'objets dans une image existe. De façon générale, l'invention s'applique à toute tâche de prédiction d'une grandeur physique prise parmi les grandeurs suivantes : une position d'un objet dans une image, une grandeur météorologique telle que la température, l'humidité ou la viscosité de l'air, une mesure d'énergie, une grandeur mesurée par un capteur.

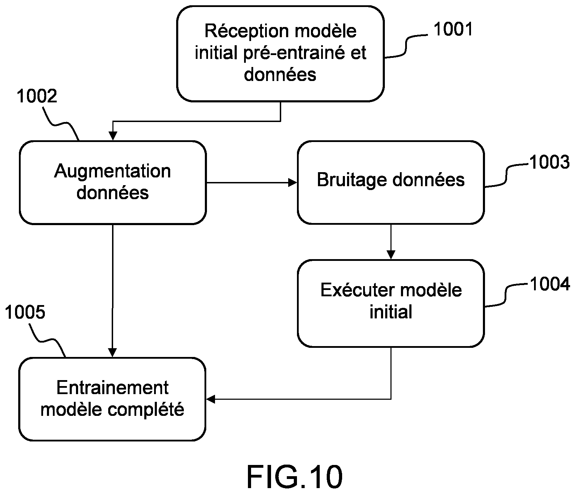

La figure 10 détaille les étapes de mise en oeuvre de la méthode selon l'invention. Elle débute à l'étape 1001 avec la réception d'un modèle d'apprentissage d'une tâche de prédiction associée à un ensemble de données d'entrainement sur lequel le modèle a été pré-entrainé.

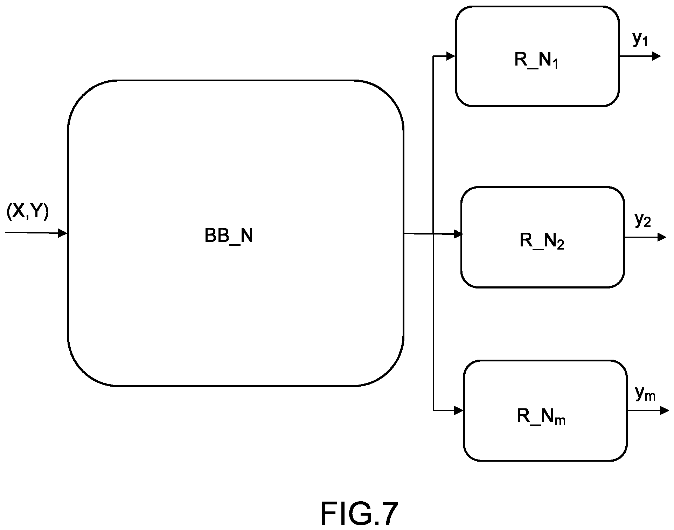

La figure 7 représente un schéma général d'un tel modèle, qui peut prendre la forme d'un réseau de neurones artificiels comprenant plusieurs couches de convolution interconnectées. De façon générale, le réseau comporte un premier sous-réseau dit « backbone » BB_N qui vise à extraire des caractéristiques pertinentes des données X reçues en entrée pour les convertir dans un espace de dimension réduite. Le processus d'entrainement du modèle est supervisé, les données X sont donc accompagnées d'un label ou annotation Y qui donnent la valeur réelle de l'information que le modèle vise à prédire. Le réseau comporte ensuite un ou plusieurs modules $R\_N_1, R\_N_2, R\_N_m$ dédiés aux tâches de régression ou prédiction de la valeur de Y à partir des données X.

Par exemple, les données d'entrée X sont des images et la variable à prédire concerne les coordonnées d'une boite englobante rectangulaire centrée sur un objet à détecter tel qu'un individu.

Les différentes branches de prédiction $R\_N_1, R\_N_2, R\_N_m$ sont par exemple entrainées pour fournir plusieurs prédictions $\hat{y_1}, \hat{y_2}, \hat{y_m}$ des coordonnées d'une boite englobante alignée sur différentes résolutions d'une grille superposée à l'image. Plus généralement, une seule branche de prédiction peut être suffisante.

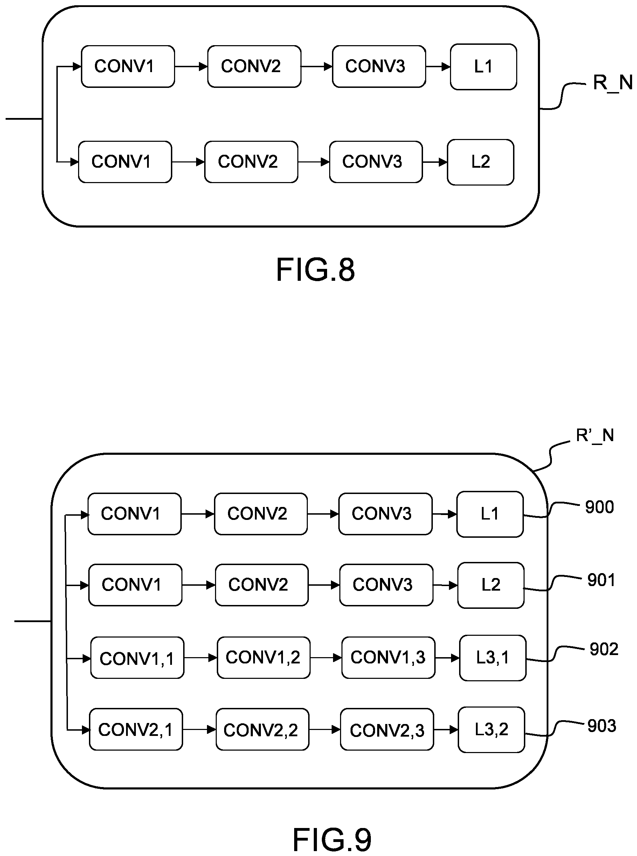

La figure 8 représente un schéma plus détaillé d'un exemple de module R_N correspondant à une branche de prédiction du modèle global.

Le module R_N reçoit en entrée les caractéristiques extraites par le réseau « backbone » BB_N. Sur l'exemple de la figure 8, le module R_N comporte une branche de prédiction et une branche de classification, par exemple pour associer une classe à un objet détecté. La branche de classification peut être optionnelle.

Chacune des branches comporte plusieurs réseaux de neurones comprenant plusieurs couches de convolution interconnectées CONV1,CONV2,CONV3 selon des architectures et paramétrages spécifiques au modèle. Les architectures des réseaux de neurones des deux branches de prédiction et classification peuvent être identiques ou différentes.

La première branche de prédiction est entrainée via l'optimisation, par exemple la minimisation, d'une première fonction de cout L1 par rapport aux paramètres du modèle. La seconde branche de classification est entrainée via l'optimisation d'une seconde fonction de cout L2.

Les méthodes d'entrainement peuvent être basées sur des techniques de rétropropagation du gradient ou toute autre technique appropriée qui font partie des connaissances générales du domaine et ne sont décrites en détail ici.

Le modèle décrit aux figures 7 et 8 est pré-entrainé sur un premier ensemble de données d'entrainement pour réaliser les tâches de prédiction et classification décrites ci-dessus. Comme indiqué en préambule, la prédiction fournie souffre d'une incertitude qu'il convient de quantifier.

Pour cela, il est proposé de compléter le modèle initial décrit à la figure 7 via un nouveau modèle R'_N décrit à la figure 9 qui comporte, en plus des branches de prédiction 900 et classification 901 du modèle initial, au moins deux branches de prédiction supplémentaires 902,903.

Ces deux branches de prédiction sont similaires à la branche de prédiction du modèle initial en ce qu'elles comportent plusieurs réseaux de neurones comprenant plusieurs couches de convolution interconnectées CONV1,1 ; CONV1,2 ; CONV1,3 ; CONV2,1 ; CONV2,2 ; CONV2,3. Chacune des branches supplémentaires 902,903 de prédiction est entrainée via l'optimisation d'une fonction de cout particulière L3,1 ; L3,2 qui sera décrite plus en détail par la suite.

L'entrainement du modèle complété R'_N permet de générer la même prédiction que le modèle initial et deux prédictions supplémentaires 902,903 qui définissent les bornes d'un intervalle d'incertitude autour de la prédiction.

On décrit à présent à l'appui de la figure 10, la méthode d'entrainement du modèle complété R'_N.

A l'étape 1001, le modèle initial R_N est pré-entrainé et on fixe les paramètres obtenus pour les branches de prédiction principales 900 et 901.

A l'étape 1002, le premier ensemble de données d'entrainement utilisé pour entrainer le modèle initial R_N est augmenté, par exemple en dupliquant chaque image du premier ensemble un nombre M de fois, où M est un entier au moins égal à 2. On obtient ainsi un deuxième ensemble de données d'entrainement augmenté.

A l'étape 1003, on applique une valeur de bruit, tirée aléatoirement, à chaque pixel de chaque image du deuxième ensemble afin de générer un troisième ensemble de données d'entrainement bruitées. Ainsi, le troisième ensemble comprend plusieurs versions de chaque image perturbée avec différentes répartitions de bruit.

Le bruit aléatoire est par exemple un bruit blanc Gaussien de variance prédéterminée mais peut être un bruit aléatoire tiré selon une autre distribution.

Le but de l'opération 1003 est de bruiter les données afin de générer une perturbation de sorte à permettre une estimation du niveau d'incertitude sur la prédiction. L'introduction d'un niveau de bruit permet l'observation d'erreurs de l'ordre des incertitudes que l'on souhaite quantifier. La variance du bruit ajouté est par exemple comprise entre $10^{-3}$ et $10^{-1}$ en considérant que la valeur des pixels est normalisée entre 0 et 1.

A l'étape 1004, on exécute le modèle initial pré-entraîné pour l'ensemble des données bruitées du troisième ensemble produit à l'étape 1003. On obtient pour chaque image, une prédiction $\widehat{y_p}$ des coordonnées de chaque boite englobante, ou plus généralement une prédiction de la position d'un objet dans l'image.

A l'étape 1005, on entraine, par réglage fin, le modèle complété avec les deux branches de prédiction de bornes d'incertitude supplémentaires, à partir du deuxième ensemble de données augmentées non bruitées de sorte à prédire deux valeurs d'incertitude $\widehat{y_{p,inf}}$ et $\widehat{y_{p,sup}}$ définissant les deux bornes d'un intervalle d'incertitude autour de la prédiction fournie par la branche de prédiction 900. Plus précisément, seules les deux branches supplémentaires sont entrainées, le reste des paramètres de l'architecture du modèle est figé aux valeurs obtenues après le pré-entrainement du modèle initial. Dans un mode de réalisation particulier, les valeurs des hyper-paramètres des branches de prédiction supplémentaires 902,903 sont initialisées aux mêmes valeurs que celles de la branche de prédiction principale 900.

Les deux branches de prédiction 902,903 sont entrainées via la minimisation d'une fonction de perte ou fonction de cout particulière.

Cette fonction de cout est donnée par la relation suivante :

$$\rho(u)_\tau = \begin{cases} \tau . u & si \quad u \geq 0 \\ (\tau - 1). u & sinon \end{cases}$$

La minimisation de la fonction de cout $\rho(u)_\tau$ pour $u = \left( \widehat{y_p} - \widehat{y_{p,inf}} \right)$ et $\rho(u)_{1-\tau}$ pour $u = \left( \widehat{y_p} - \widehat{y_{p,sup}} \right)$ permet de faire en sorte que les prédictions $\widehat{y_{p,inf}}$ et $\widehat{y_{p,sup}}$ qui minimisent ces deux fonctions soient égales au quantile d'ordre $\tau$ de la distribution des valeurs de y. Cette propriété est notamment démontrée dans la référence [5]. En choisissant la valeur de $\tau$ de façon appropriée, les deux valeurs de prédiction

d'incertitude $\widehat{y_{p,inf}}$ et $\widehat{y_{p,sup}}$ fournies par le modèle complété correspondent aux quantiles d'ordre $\tau$ et $1 - \tau$ de la distribution des valeurs de la prédiction y.

La valeur de quantile $\tau$ est prise dans l'intervalle ] 0 ; 0.5[, elle dépend du niveau de précision de la prédiction d'incertitude souhaité et également de la variance du bruit ajouté. Si la variance du bruit est très élevée, la valeur de $\tau$ est prise proche de 0 et à l'inverse si la variance du bruit est faible, la valeur de $\tau$ est prise proche 0.5.

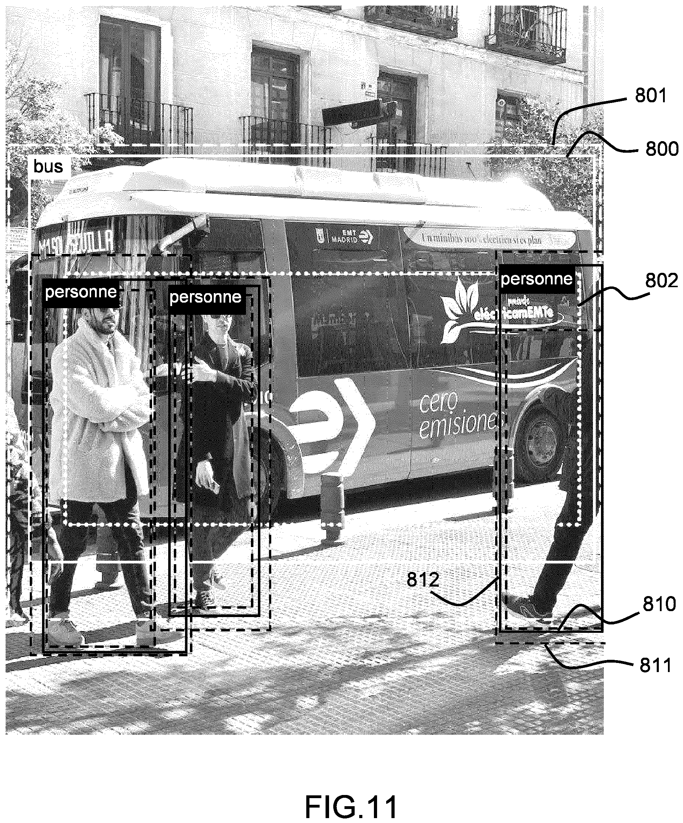

La figure 11 montre un exemple de résultat obtenu par l'exécution de l'invention pour une application de détection d'objets dans une image. Selon cet exemple, le modèle initial est entrainé à prédire les coordonnées de boites englobantes encadrant un objet, par exemple un bus ou une personne, l'objet étant par ailleurs classifié via une tâche de classification.

Comme représenté sur la figure 11, la prédiction principale de la boite englobante 800,810 est augmentée de deux prédictions définissant les bornes supérieures et inférieures d'un intervalle d'incertitude. Ainsi, la prédiction principale 800 de la boite englobante du bus sur la figure 11 est accompagnée des deux prédictions 801 et 802 de deux boites englobantes définissant les limites de l'intervalle d'incertitude. Les mêmes résultats sont affichés pour une personne via la prédiction principale 810 et les prédictions secondaires 811 et 812.

Sans sortir du cadre de l'invention, les deux branches de prédiction 902,903 peuvent être remplacées par une branche de prédiction unique entrainée pour prédire directement les deux valeurs d'incertitude correspondant aux deux bornes de l'intervalle d'incertitude.

Alternativement, les deux valeurs d'incertitude prédites peuvent également être ajoutées directement à la branche de prédiction principale 900 sans nécessité d'ajouter des branches de prédiction supplémentaires au modèle.

L'invention peut être mise en oeuvre en tant que programme d'ordinateur comportant des instructions pour son exécution. Le programme d'ordinateur peut être enregistré sur un support d'enregistrement lisible par un processeur.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en oeuvre des aspects des techniques décrites ici. Les moyens ou ressources informatiques peuvent notamment être distribués (*"Cloud computing"*), éventuellement selon des technologies de pair-à-pair. Le code logiciel peut être exécuté sur n'importe quel processeur approprié (par exemple, un microprocesseur) ou coeur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en oeuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

L'invention peut être implémentée sur un dispositif de calcul basé, par exemple, sur un processeur embarqué. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »). Le dispositif de calcul peut utiliser un ou plusieurs circuits électroniques dédiés ou un circuit à usage général. La technique de l'invention peut se réaliser sur une machine de calcul reprogrammable (un processeur ou un micro-contrôleur par exemple) exécutant un programme comprenant une séquence d'instructions, ou sur une machine de calcul dédiée (par exemple un ensemble de portes logiques comme un FPGA ou un ASIC, ou tout autre module matériel).

Références

[1] Mehmet S Ayhan and Philipp Berens. Test-time data augmentation for estimation of heteroscedastic aleatoric uncertainty in deep neural networks. In International Conférence on Medical Imaging with Deep Learning (MIDL), pages 1-11, 2018.
[2] Robi Polikar. Ensemble learning. In Ensemble Machine Learning, pages 1-34. Springer, 2012.
[3] IQBAL, Khalid, YIN, Xu-Cheng, HAO, Hong-Wei, et al. An overview of bayesian network applications in uncertain domains. International Journal of Computer Theory and Engineering, 2015, vol. 7, no 6, p. 416.
[4] Ian Osband and Benjamin Van Roy. Scalable bayesian learning with state space models. In AAAI Conférence on Artificial Intelligence, 2018.
[5] Thomas S Ferguson. Mathematical statistics: A decision theoretic approach. Academic press, 2014.

**Revendications**

1. Méthode, mise en oeuvre par ordinateur, d'entrainement d'un modèle de prédiction automatique d'une grandeur physique prise parmi les grandeurs suivantes : une position d'un objet dans une image, une grandeur météorologique telle que la température, l'humidité ou la viscosité de l'air, une mesure d'énergie, une grandeur mesurée par un capteur, la méthode comprenant les étapes de :

    - Recevoir (1001) un modèle initial de prédiction automatique de ladite grandeur, le modèle étant pré-entrainé sur un premier ensemble de données d'entrainement,
    - Générer (1002) un deuxième ensemble de données d'entrainement à partir du premier ensemble de données d'entrainement en dupliquant chaque donnée du premier ensemble plusieurs fois,
    - Générer (1003) un troisième ensemble de données d'entrainement en ajoutant à chaque donnée du deuxième ensemble de données d'entrainement une valeur de bruit tirée aléatoirement,
    - Pour chaque donnée du troisième ensemble de données d'entrainement, exécuter (1004) le modèle initial de prédiction automatique pour déterminer une prédiction principale de la grandeur physique,
    - Compléter le modèle initial pour prédire en outre au moins deux valeurs d'incertitude associées à la prédiction principale,
    - Entrainer (1005) le modèle complété à partir du deuxième ensemble de données d'entrainement de manière à ce que chaque valeur d'incertitude prédite soit égale à une valeur de quantile de la distribution des valeurs de prédiction principale fournie par le modèle initial à partir du troisième ensemble de données d'entrainement,
    - le modèle complété étant entrainé en minimisant une fonction de perte de quantile fonction de la différence entre une prédiction de la grandeur physique fournie par le modèle initial à partir du troisième ensemble de données d'entrainement et chaque prédiction respective d'une valeur d'incertitude fournie par le modèle complété

2. Méthode d'entrainement d'un modèle de prédiction automatique selon la revendication 1 dans laquelle le modèle initial comprend une branche de prédiction principale de la grandeur physique et le modèle complété comprend en outre au moins une branche de prédiction supplémentaire entrainée pour prédire les valeurs d'incertitudes.

**3.** Méthode d'entrainement d'un modèle de prédiction automatique selon l'une quelconque des revendications précédentes dans laquelle la fonction de perte de quantile est définie par la relation suivante :

$$\rho\big((y - \hat{y})\big)_\tau = \begin{cases} \tau(y - \hat{y}) \, si \, (y - \hat{y}) \geq 0 \\ (\tau - 1)(y - \hat{y}) \, sinon \end{cases}$$

$\tau$ est une valeur de quantile comprise entre 0 et 1, y est une prédiction de la grandeur physique fournie par le modèle initial à partir du troisième ensemble de données d'entrainement, $\hat{y}$ est une prédiction d'une valeur d'incertitude fournie par le modèle complété.

**4.** Méthode d'entrainement d'un modèle de prédiction automatique selon l'une quelconque des revendications précédentes dans laquelle la seconde valeur de quantile est égale à un moins la première valeur de quantile.

**5.** Méthode d'entrainement d'un modèle de prédiction automatique selon l'une quelconque des revendications précédentes dans laquelle le modèle initial comporte une première partie entrainée pour extraire un ensemble de caractéristiques des données d'entrée et une seconde partie comprenant au moins une branche de prédiction.

**6.** Méthode d'entrainement d'un modèle de prédiction automatique selon la revendication 5 dans laquelle la seconde partie du modèle complété comprend une branche de prédiction principale pour prédire une prédiction de ladite grandeur physique et au moins une branche de prédiction supplémentaire des valeurs d'incertitudes de ladite grandeur physique, les paramètres d'entrainement de l'au moins une branche de prédiction de valeurs d'incertitudes étant initialisées aux paramètres d'entrainement de la branche de prédiction principale de la dite grandeur physique.

**7.** Méthode d'entrainement d'un modèle de prédiction automatique selon l'une quelconque des revendications précédentes dans laquelle les données d'entrainement sont des ensembles d'images et la grandeur physique est une position d'un objet dans une image.

**8.** Méthode d'entrainement d'un modèle de prédiction automatique selon la revendication 7 dans laquelle le modèle initial est entrainé à détecter un objet dans une image et à prédire les coordonnées d'une boite englobant l'objet.

**9.** Méthode, mise en oeuvre par ordinateur, de prédiction automatique d'une grandeur physique comprenant l'exécution du modèle de prédiction automatique complété, entrainé au moyen de la méthode d'entrainement selon l'une quelconque des revendications précédentes de manière à déterminer une prédiction de ladite grandeur physique et deux valeurs d'incertitude de ladite grandeur physique définissant une plage d'incertitude.

**10.** Méthode de prédiction automatique d'une grandeur physique selon la revendication 9 dans laquelle la grandeur physique est une position d'un objet dans une image et les données d'entrainement sont des ensembles d'images.

**11.** Dispositif de prédiction automatique d'une grandeur physique comprenant une unité de calcul configurée pour exécuter les étapes de la méthode selon la revendication 10 et une interface d'affichage pour afficher les résultats de la méthode.

**12.** Dispositif de prédiction automatique selon la revendication 11 dans lequel la grandeur physique est une position d'un objet dans une image et les données d'entrainement sont des ensembles d'images.

**13.** Programme d'ordinateur comprenant des instructions de code pour la mise en oeuvre de l'une des méthodes selon l'une quelconque des revendications 1 à 10, lorsque ledit programme est exécuté sur un ordinateur.

**14.** Support d'enregistrement lisible par ordinateur sur lequel est enregistré le programme d'ordinateur selon la revendication 13.

FIG.1

FIG.2

FIG.3

FIG.4

FIG.5

FIG.6

FIG.7

FIG.8

FIG.9

Réception modèle initial pré-entrainé et données — 1001

1002 — Augmentation données

Bruitage données — 1003

Exécuter modèle initial — 1004

1005 — Entrainement modèle complété

FIG.10

FIG.11

**RAPPORT DE RECHERCHE EUROPEENNE**

Europäisches Patentamt
European Patent Office
Office européen des brevets

Numéro de la demande

EP 24 21 9161

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | BRAMLAGE LENNART ET AL: "Plausible Uncertainties for Human Pose Regression", 2023 IEEE/CVF INTERNATIONAL CONFERENCE ON COMPUTER VISION (ICCV), IEEE, 1 octobre 2023 (2023-10-01), pages 15087-15096, XP034514914, DOI: 10.1109/ICCV51070.2023.01389 | 1-6,9, 13,14 | INV. G06N3/0464 G06N3/084 G06N3/0895 G06N3/09 G06T7/00 G06V10/70 |
| A | * page 15087 - page 15092 * | 7,8, 10-12 | |
| | ----- | | |
| A | INGO STEINWART ET AL: "Estimating conditional quantiles with the help of the pinball loss", ARXIV.ORG, CORNELL UNIVERSITY LIBRARY, 201 OLIN LIBRARY CORNELL UNIVERSITY ITHACA, NY 14853, 10 février 2011 (2011-02-10), XP080498307, DOI: 10.3150/10-BEJ267 * page 211 - page 212 * | 1-14 | |
| | ----- | | |

DOMAINES TECHNIQUES RECHERCHES (IPC)

G06N
G06T
G06V

Le présent rapport a été établi pour toutes les revendications

| Lieu de la recherche | Date d'achèvement de la recherche | Examinateur |
|---|---|---|
| La Haye | 11 avril 2025 | Bohn, Patrice |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.........................................................................
& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MEHMET S AYHAN** ; **PHILIPP BERENS**. Test-time data augmentation for estimation of heteroscedastic aleatoric uncertainty in deep neural networks.. *International Conférence on Medical Imaging with Deep Learning (MIDL)*, 2018, 1-11
- Ensemble learning.. **ROBI POLIKAR.** Ensemble Machine Learning. Springer, 2012, 1-34
- **IQBAL, KHALID** ; **YIN, XU-CHENG** ; **HAO, HONG-WEI et al.** An overview of bayesian network applications in uncertain domains.. *International Journal of Computer Theory and Engineering,*, 2015, vol. 7 (6), 416
- **IAN OSBAND** ; **BENJAMIN VAN ROY.** Scalable bayesian learning with state space models.. *AAAI Conférence on Artificial Intelligence*, 2018
- **THOMAS S FERGUSON.** Mathematical statistics: A decision theoretic approach. Academic press, 2014